# EUROPEAN PATENT SPECIFICATION

(11) **EP 1 598 243 B1**
(45) Date of publication and mention of the grant of the patent: **08.08.2007**
(21) Application number: 05001569.2
(22) Date of filing: 26.01.2005
(51) Int. Cl.: B60R 21/16

(54) **Knee-protecting airbag and occupant's-leg-protecting apparatus**
Knieschutz-Airbag und Beinschutzeinrichtung eines Insassen
Airbag pour protéger les genoux et dispositif de protection des jambes pour les passengers

(30) Priority: 27.02.2004 JP 2004054306
(43) Date of publication of application: 23.11.2005
(73) Proprietor: TAKATA CORPORATION, Minato-ku, Tokyo 106-8510 (JP)
(72) Inventor: Abe, Kazuhiro, Minato-ku Tokyo 106-8510 (JP); Kumagai, Masayoshi, Minato-ku Tokyo 106-8510 (JP); Murakami, Yoshiki, Konan-shi Shiga 520-3222 (JP)
(74) Representative: Banzer, Hans-Jörg

(56) References cited:
- DE-A1- 10 141 437
- US-A1- 2002 153 717
- PATENT ABSTRACTS OF JAPAN vol. 2003, no. 11, 5 November 2003 (2003-11-05) -& JP 2003 182504 A (TOYODA GOSEI CO LTD), 3 July 2003 (2003-07-03)

## Description

The present invention relates to a knee-protecting airbag and an occupant's-leg-protecting apparatus including this knee-protecting airbag, the knee-protecting airbag serving to prevent the occupant's leg from an impact with the instrument panel in front of the seat and to restrain movement of the knee to restrain forward movement of the lower body of the occupant in an automobile crash.

Occupant's-leg-protecting apparatuses prevent the occupant's leg from an impact with the instrument panel in front of the seat and being subjected to a heavy load in a frontal crash of a high-speed moving body, such as an automobile. Some of the occupant's-leg-protecting apparatuses include a knee-protecting airbag being inflated in front of the occupant's leg, and an inflator (gas generator) for inflating the knee-protecting airbag.

Japanese Unexamined Patent Application Publication No. 2003-182504 discloses an occupant's-leg-protecting apparatus including a knee-protecting airbag including a tether connecting the cloth on the occupant's side and the cloth on the instrument panel side of the knee-protecting airbag.

In the occupant's-leg-protecting apparatus according to the above publication, the thickness of the inflated knee-protecting airbag is restricted by this tether.

In order to restrain both legs of the occupant evenly, it is preferable that when the knee-protecting airbag is inflated, the thickness of the knee-protecting airbag be substantially uniform in the lateral direction (from one side to the other side of the knee-protecting airbag).

In order to make the thickness of the inflated knee-protecting airbag substantially uniform in the lateral direction, it is possible that the lateral width of the tether be increased and the tether extend continuously in the lateral direction (continuously from one side to the other side of the knee-protecting airbag). However, increasing the lateral width of the tether makes the air-flow space narrow in the knee-protecting airbag and can slow down the inflation rate of the knee-protecting airbag.

In the case where the lateral width of the tether is increased, an opening may be provided in the middle in the lateral direction of the tether to form an air-flow space. However, providing such an opening requires time and cost.

US 2002/0153717 A1 discloses an airbag with a reinforcement region comprising a tether system with tether panels. The tether panels are arranged in lapped fashion in the interior of the airbag between a first cloth and a second cloth of the airbag. The first cloth of the airbag is arranged on a side of the occupant, while the second cloth is arranged on the opposite side from the occupant. In the thickness direction of the airbag, the middle of the tethers is narrower than the ends of the tethers, and air-flow spaces are formed between left ends of the tethers and a left side of the airbag and between right ends of the tethers and a right side of the airbag.

It is an object of the present invention to provide a knee-protecting airbag whose thickness when inflated is uniform in the lateral direction and which is capable of being inflated rapidly, and an occupant's-leg-protecting apparatus including the knee-protecting airbag.

According to the present invention, these objects are achieved by a knee-protecting airbag according to claim 1 and an occupant's-leg-protecting apparatus according to claim 4. The dependent claims define preferred and advantageous embodiments of the invention.

The knee-protecting airbag of the present invention is a knee-protecting airbag being inflated in front of an occupant's leg. The airbag includes a first cloth on the side of the occupant; a second cloth on the opposite side from the occupant; and a tether provided in the airbag and connecting the first cloth and the second cloth. The tether extends continuously in the lateral direction such that the lateral width of the tether is 55 to 80% of the lateral width of the knee-protecting airbag at a position where the tether connects the first cloth and the second cloth. Air-flow spaces are formed between the left end of the tether and the left side of the airbag and between the right end of the tether and the right side of the airbag. In the thickness direction of the airbag, the middle of the tether is narrower than the ends of the tether.

The occupant's-leg-protecting apparatus of the present invention includes the knee-protecting airbag of the present invention and an inflator for inflating the airbag.

In the present invention, the term "the tether extends continuously in the lateral direction" means that the lateral width (maximum width) of the tether is 55 to 80% of the lateral width of the knee-protecting airbag (in the position where the tether is fixed).

In the knee-protecting airbag and the occupant's-leg-protecting apparatus of the present invention, when the knee-protecting airbag is inflated by the gas from the inflator, the gas flows in the knee-protecting airbag through the air-flow spaces to inflate the airbag, the spaces being formed between the left end of the tether and the left side of the airbag and between the right end of the tether and the right side of the airbag.

In the knee-protecting airbag of the present invention, since the tether extends continuously in the lateral direction, the thickness of the inflated knee-protecting airbag is substantially uniform in the lateral direction.

In the thickness direction of the airbag, the middle of the tether is narrower than the ends of the tether. The ends of the tether mean the connecting edges between the tether, the occupant-side cloth of the airbag, and the opposite-side cloth of the airbag. In other words, both lateral edges of the tether are curved inward.

Therefore, in the knee-protecting airbag of the present invention, since both lateral edges of the tether are curved inward, the cross-sectional area of each air-flow space is large. Through these air-flow spaces, the gas can flow in the airbag with a sufficient flow volume and flow rate. Therefore, the knee-protecting airbag is inflated sufficiently rapidly.

The preferred embodiments of the present invention will now be described with reference to the drawings.

FIG. 1 is a sectional view of a seat and its vicinity of a vehicle showing an inflated knee-protecting airbag according to an embodiment of the invention.

FIG. 2(a) is a front view of the inflated knee-protecting airbag in FIG. 1.

FIG. 2(b) is a sectional view taken along line B-B of FIG. 2(a).

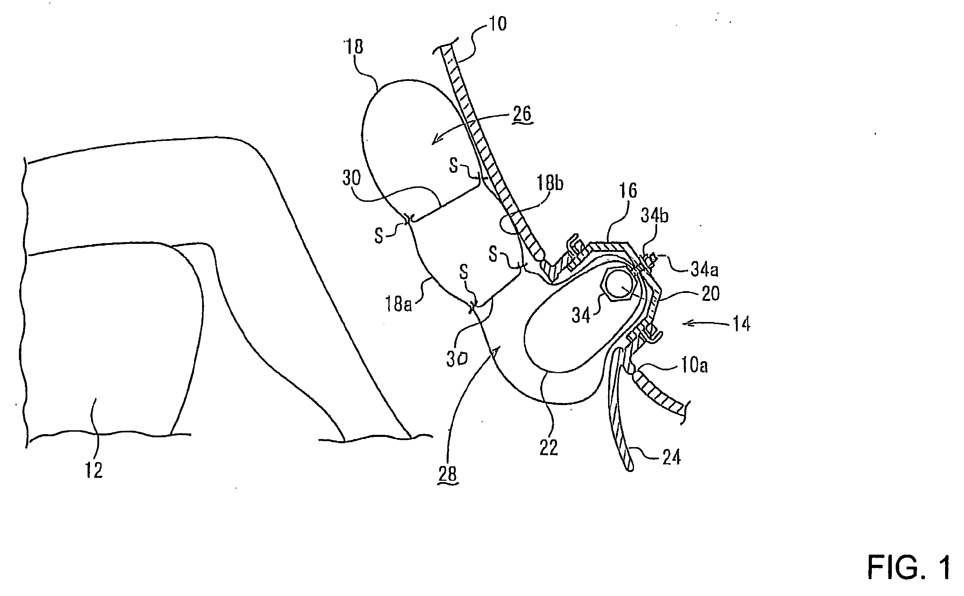

An occupant's-leg-protecting apparatus 14 of Fig. 1 is installed in an instrument panel 10 in front of a seat 12.

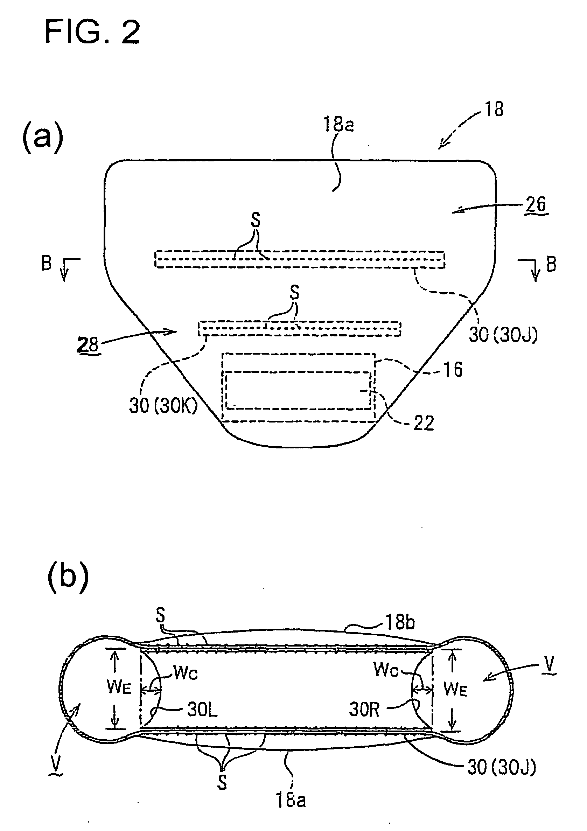

This occupant's-leg-protecting apparatus 14 includes a retainer 16, which is a container whose front face (occupant side) is open; a knee-protecting airbag 18 of Fig. 1 and Fig. 2 connected to the inside of the retainer 16; an inflator (gas generator) 20 for inflating the knee-protecting airbag 18; and a diffuser 22 disposed in the knee-protecting airbag 18 and guiding the gas flow from the inflator 20 in the lateral direction in the knee-protecting airbag 18.

The retainer 16 is disposed in an opening 10a provided in the instrument panel 10. Usually, the knee-protecting airbag 18 and the diffuser 22 are folded and contained in the retainer 16. A lid 24 is provided in the front face of the retainer 16 so as to cover the folded knee-protecting airbag 18. Usually, this lid 24 is disposed so as to be substantially co-planar with the instrument panel 10. When the knee-protecting airbag 18 is inflated, as shown in FIG. 1, the lid 24 opens with its lower end as an axis toward the front of the instrument panel 10.

As shown in Fig. 1, the opening 10a is provided in the position lower than the top of the seat 12. The knee-protecting airbag 18 is inflated upward from the opening 10a along the front face (the occupant side) of the instrument panel 10.

As shown in Fig. 2(a), the knee-protecting airbag 18 includes a uniform width portion 26 and a narrow portion 28. The uniform width portion 26 is the upper portion of the airbag 18 and its lateral width is substantially uniform for a predetermined vertical width. The narrow portion 28 is the lower portion of the airbag 18 and becomes narrower toward the bottom. The lower end of the narrow portion 28 is connected to the retainer 16.

The uniform width portion 26 is disposed so as to be higher than the top of the seat 12 when the knee-protecting airbag 18 is inflated from the opening 10a upward along the front face of the instrument panel 10. Therefore, when the knee-protecting airbag 18 is inflated in front of the knees of the occupant, the uniform width portion 26 faces the knees of the occupant sitting in the seat 12.

The lateral width of the uniform width portion 26 is preferably 500 to 600 mm. The lateral width of the front opening of the retainer 16 is preferably less than or equal to half of the width of the uniform width portion 26, more preferably 40 to 50% thereof.

As shown in Fig. 2(a), the left and right sides of the narrow portion 28 preferably connect the lower ends of the left and right sides of the uniform width portion 26 and the left and right lower corners of the front opening of the retainer 16, respectively.

Inside the knee-protecting airbag 18, a plurality of tethers 30 (two tethers 30J and 30K in this embodiment) are provided. The tethers 30 connect the front side (occupant-side cloth) 18a and the rear side (instrument-panel-side cloth) 18b of the knee-protecting airbag 18. The character S denotes seams connecting the tethers 30 (30K and 30J) to the front side 18a and the rear side 18b. The upper tether 30J is disposed in a boundary between the uniform width portion 26 and the narrow portion 28 or in a position slightly higher than the boundary (preferably 0 to 70 mm higher than the boundary between the uniform width portion 26 and the narrow portion 28). The lower tether 30K is disposed in the middle in the vertical direction of the narrow portion 28.

The tethers 30 (30J and 30K) extend continuously in the lateral direction. Each tether is connected to the front side 18a and the rear side 18b across a predetermined lateral width. As shown in Fig. 2(b), the left and right ends of each tether 30 (only the tether 30J is shown in Fig. 2(b)) are separated from the left and right sides of the knee-protecting airbag 18, respectively. Between the left end of each tether 30 and the left side of the airbag 18 and between the right end of each tether 30 and the right side of the airbag 18, air-flow spaces V are formed.

As shown in Fig. 2(b), in the thickness direction of the airbag 18, the middle of each tether 30 is narrower than the ends of each tether. The ends of each tether mean the stitched edges between each tether, the front side 18a, and the rear side 18b of the airbag. That is to say, in this embodiment, the left edge 30L and the right edge 30R of each tether 30 are curved inward.

As shown in Fig. 2(b), W_{C} is the distance from the line segment connecting the ends of the left edge 30L to the middle of the left edge 30L or the distance from the line segment connecting the ends of the right edge 30R to the middle of the right edge 30R (that is to say, the distance by which the left edge 30L or the right edge 30R is curved inward). W_{E} is the width of the left edge 30L or the right edge 30R in the thickness direction of the knee-protecting airbag 18. In the present invention, W_{C} is preferably 5 to 50% of W_{E}.

The cross-sectional area of each air-flow space V surrounded by the left edge 30L or the right edge 30R of each tether 30 and the left or right side of the knee-protecting airbag 18 is preferably 3000 to 7850 mm², more preferably 4500 to 5500 mm². In this case, when the knee-protecting airbag 18 is folded flatly, the (shortest) distance from the left edge 30L or the right edge 30R of each tether 30 to the left or right side of the knee-protecting airbag 18 is preferably 80 to 130 mm, more preferably 90 to 120 mm.

In this embodiment, the line segment connecting the left ends of the upper and lower tethers 30J and 30K is preferably parallel to the left side of the narrow portion 28, and the line segment connecting the right ends of the upper and lower tethers 30J and 30K is preferably parallel to the right side of the narrow portion 28. In addition, the distance between each line segment and the corresponding side of the narrow section 28 is preferably 80 to 130 mm, and more preferably 90 to 120 mm. In the case of such a structure, the gas from the inflator 20 flows rapidly upward through the air-flow spaces V and along the sides of the narrow portion 28.

The diffuser 22 is provided in the narrow portion 28. The inflator 20 is disposed in the diffuser 22. In this embodiment, the diffuser 22 has a tubular shape and is made by stitching a heat-resistant flexible cloth or synthetic-resin. The diffuser 22 is disposed so that openings at the ends face in the lateral direction. Therefore, when the inflator 20 discharges gas in the diffuser 22, the gas from the inflator 20 is guided only in the lateral direction by the openings of the diffuser 22.

In this embodiment, the diffuser 22 has a size capable of projecting forward (toward the occupant) from the front face of the instrument panel 10 as shown in Fig. 1 due to the pressure of the gas discharged from the inflator 20 in the diffuser 22. The size of the diffuser 22 is preferably set so that the diffuser 22 projects 60 to 100 mm from the front face of the instrument panel 10, or so that the area of part of each opening corresponding to part of the diffuser 22 projecting from the front face of the instrument panel 10 is 3000 to 7850 mm².

In this embodiment, the inflator 20 is formed in a rod shape, and disposed in the diffuser 22 so that a longitudinal direction thereof is aligned laterally. The inflator 20 includes gas-discharging ports (not shown) in its circumferential surface.

The inflator 20 is held by an inflator holder 34. This inflator holder 34 includes a base portion and a band portion fixing the inflator 20 to the base portion (both of the portions are depicted with no reference numeral). A stud bolt 34a is projecting from the base portion.

The stud bolt 34a passes through bolt holes (depicted with no reference numeral) provided in the rear side (opposite side from the occupant) of the diffuser 22 and in the rear side 18b of the lower end of the narrow portion 28, projects from the back (opposite side from the occupant) of the airbag 18, and passes through a bolt hole (depicted with no reference numeral) provided in the retainer 16. With the stud bolt 34a and a nut 34b, the inflator holder 34 is fixed in the retainer 16, and the rear side of the diffuser 22 and the rear side 18a of the lower end of the narrow portion 28 are held between the inflator holder 34 and the retainer 16.

In the case of a frontal crash of the vehicle provided with the occupant's-leg-protecting apparatus 14 having the above structure, the inflator 20 discharges gas. Due to the discharge of gas from the inflator 20, the knee-protecting airbag 18 starts to be inflated. The knee-protecting airbag 18 pushes so as to open the lid 24, is inflated on the front of the instrument panel 10, and is inflated upward along the instrument panel 10. Then, the uniform width portion 26 in the upper portion of the inflated knee-protecting airbag 18 faces the knees of the occupant and protects them.

In this embodiment, the narrow portion 28 of the knee-protecting airbag 18 becomes narrower toward the bottom, in other words, becomes wider upward. The gas from the inflator 20 disposed in the lower end of the narrow portion 28 flows upward through the air-flow spaces V, which are formed between the left end of each tether 30 (30J, 30K) and the left side of the narrow portion 28 and between the right end of each tether 30 (30J, 30K) and the right side of the narrow portion 28. Therefore, when the knee-protecting airbag 18 is inflated, first, the narrow portion 28 is inflated upward and laterally, next, the uniform width portion 26 is inflated so as to bridge the inflated parts on both sides of the narrow portion 28, and then the middle of the knee-protecting airbag 18 is inflated.

In this knee-protecting airbag 18, since the left edge 30L and the right edge 30R of each tether 30 are curved inward, the cross-sectional area of each air-flow space V is large. In this embodiment, the cross-sectional area of each of the air-flow spaces V formed between the left edge 30L of each tether 30 and the left side of the airbag 18 and between the right edge 30R of each tether 30 and the right side of the airbag 18 is preferably 3000 to 7850 mm², more preferably 4500 to 5500 mm². Therefore, the gas can flow in the knee-protecting airbag 18 through the air-flow spaces V with sufficient flow volume and flow rate. As a result, the knee-protecting airbag 18 is inflated sufficiently rapidly.

In this knee-protecting airbag 18, since each tether 30 extends laterally and continuously, the thickness of the inflated knee-protecting airbag 18 is substantially uniform in the lateral direction. Therefore, both knees of the occupant can be protected substantially uniformly by the inflated knee-protecting airbag 18.

In this embodiment, the upper tether 30J is located on the boundary between the uniform width portion 26 and the narrow portion 28 or in the position higher than the boundary, and the tether 30J has a large lateral width. Therefore, the capacity of the uniform width portion 26 is comparatively small, and the uniform width portion 26 is inflated rapidly.

Since both sides and the uniform width portion 26 of the knee-protecting airbag 18 are inflated rapidly, the knee-protecting airbag 18 are inflated rapidly laterally and upward.

In this embodiment, since the diffuser 22 guides the gas flow from the inflator 20 to the lateral direction, the lateral inflation of the knee-protecting airbag 18 is more rapid.

In addition, in this embodiment, when the knee-protecting airbag 18 is inflated, the diffuser 22 in the knee-protecting airbag 18 projects 60 to 100 mm forward from the front face of the instrument panel 10 due to the pressure of the gas discharged from the inflator 20. Therefore, the gas from the inflator 20 flows from the openings of the diffuser 22 in the lateral direction without hitting the inner wall of the knee-protecting airbag 18 and changing direction. As a result, the gas from the inflator 20 can be guided efficiently in the lateral direction.

The above embodiment is merely an example of the present invention, and the present invention is not limited to the above embodiment.

## Claims

1. A knee-protecting airbag (18) being inflated in front of an occupant's leg, the airbag comprising:
a first cloth (18a) on the side of the occupant;
a second cloth (18b) on the opposite side from the occupant; and
a tether (30) provided in the airbag and connecting the first cloth (18a) and the second cloth (18b),
wherein the tether (30) extends in the lateral direction such that the lateral width of the tether (30) is 55 to 80% of the lateral width of the knee-protecting airbag (18) at a position where the tether connect the first cloth (18a) and the second cloth (18b);
air-flow spaces (V) are formed between the left end of the tether (30L) and the left side of the airbag and between the right end of the tether (30R) and the right side of the airbag; and
in the thickness direction of the airbag, the middle of the tether (30) is narrower than the ends of the tether (30).

2. The knee-protecting airbag (18) according to claim 1,
wherein a diffuser (22) guides the gas introduced by an inflator (20) in the lateral direction.

3. The knee-protecting airbag (18) according to claim 2,
wherein the diffuser (22) is disposed in the airbag (18) such that openings thereof face in the lateral direction so that the gas from the inflator (20) is guided by the openings only in the lateral direction.

4. An occupant's-leg-protecting (14) apparatus comprising:
a knee-protecting airbag capable of being inflated in front of an occupant's leg; and
an inflator for inflating the airbag,
wherein the airbag is the knee-protecting airbag (18) according to any one of claims 1-3.

## Patentansprüche

1. Knieschutzairbag (18), welcher vor einem Insassenbein aufgeblasen wird, wobei der Airbag umfasst:
einen ersten Stoff (18a) auf der Seite des Insassen;
einen zweiten Stoff (18b) an der gegenüberliegenden Seite des Insassens; und
einen Haltegurt (30), welcher in dem Airbag vorgesehen ist und den ersten Stoff (18a) und den zweiten Stoff (18b) verbindet,
wobei sich der Haltegurt (30) in der seitlichen Richtung derart erstreckt, dass die seitliche Breite des Haltegurts (30) 55 bis 80% der seitlichen Breite des Knieschutzairbags (18) an einer Position beträgt, wo der Haltegurt (30) den ersten Stoff (18a) und den zweiten Stoff (18b) verbindet;
wobei Luftströmungsräume (V) zwischen dem linken Ende des Haltegurts (30L) und der linken Seite des Airbags und zwischen dem rechten Ende des Haltegurts (30R) und der rechten Seite des Airbags ausgebildet sind; und
wobei in der Dickenrichtung des Airbags die Mitte des Haltegurts (30) schmaler als die Enden des Haltegurts (30) ist.

2. Knieschutzairbag (18) nach Anspruch 1,
wobei ein Diffusor (22) das Gas, welches von einer Aufblasvorrichtung (20) eingeführt wird, in der seitlichen Richtung führt.

3. Knieschutzairbag (18) nach Anspruch 2,
wobei der Diffusor (22) in dem Airbag (18) derart angeordnet ist, dass Öffnungen davon in der seitlichen Richtung derart gegenüberliegend sind, dass das Gas von der Aufblasvorrichtung (20) durch die Öffnungen nur in der seitlichen Richtung geführt wird.

4. Insassenbeinschutzvorrichtung (14) umfassend:
einen Knieschutzairbag, welcher geeignet ist, vor einem Insassenbein aufgeblasen zu werden; und
eine Aufblasvorrichtung zum Aufblasen des Airbags,
wobei der Airbag der Knieschutzairbag (18) nach einem der Ansprüche 1-3 ist.

## Revendications

1. Coussin gonflable de protection des genoux (18) gonflé à l'avant d'une jambe d'un occupant, le coussin gonflable comprenant :
- un premier tissu (18a) du côté de l'occupant ;
- un second tissu (18b) du côté opposé à l'occupant ; et
- une longe (30) disposée dans le coussin gonflable et reliant le premier tissu (18a) et le second tissu (18b),
dans lequel la longe (30) s'étend dans la direction latérale de sorte que la largeur latérale de la longe (30) soit de 55 à 80 % de la largeur latérale du coussin gonflable de protection des genoux (18) au niveau d'une position où la longe (30) relie le premier tissu (18a) et le second tissu (18b);
des espaces de flux d'air (V) sont formés entre l'extrémité gauche de la longe (30L) et le côté gauche du coussin gonflable et entre l'extrémité droite de la longe (30R) et le côté droit du coussin gonflable ; et
dans le sens de l'épaisseur du coussin gonflable, le milieu de la longe (30) est plus étroit que les extrémités de la longe (30).

2. Coussin gonflable de protection des genoux (18) selon la revendication 1,
- dans lequel un diffuseur (22) guide le gaz introduit par un dispositif de gonflage (20) dans la direction latérale.

3. Coussin gonflable de protection des genoux (18) selon la revendication 2, dans lequel le diffuseur (22) est disposé dans le coussin gonflable (18) de sorte que ses ouvertures doivent tourner dans la direction latérale afin que le gaz provenant du dispositif de gonflage (20) soit guidé par les ouvertures uniquement dans la direction latérale.

4. Dispositif de protection des jambes d'un occupant (14) comprenant :
- un coussin gonflable de protection des genoux capable d'être gonflé à l'avant d'une jambe d'un occupant ; et
- un dispositif de gonflage pour gonfler le coussin gonflable,
dans lequel le coussin gonflable est le coussin gonflable de protection des genoux (18) selon l'une quelconque des revendications 1 à 3.
